# EUROPEAN PATENT APPLICATION

(11) **EP 4 712 314 A1**
(43) Date of publication of application: **18.03.2026**
(21) Application number: 25201269.5
(22) Date of filing: 10.09.2025
(51) Int. Cl.: H02K 3/28, H02K 3/12, H02K 3/50, H02K 15/33

(54) **WINDING ASSEMBLY OF STATOR COMPRISING CONTINUOUS CONDUCTORS**

(30) Priority: 13.09.2024 KR 20240125577; 21.01.2025 KR 20250008479
(71) Applicant: Hyundai Mobis Co., Ltd., Gangnam-gu Seoul 06141 (KR)
(72) Inventor: LEE, Yeol Kyeong, Yongin-si, Gyeonggi-do 16891 (KR)
(74) Representative: Jung, Minkyu

(57) **Abstract**

A continuous winding assembly, being applied to a stator including slots having a plurality of slot groups and arranged in a consecutive position with a slot group per rotor pole, comprising:

a first winding portion including a plurality of first wires (110, 120) having a first pitch, the continuous first wires (110, 120) pass through the plurality of slot groups;

a second winding portion including a plurality of second wires (210, 220) having said first pitch, t the continuous second wires (210, 220) pass through the plurality of slot groups carrying said first wires, the plurality of second wires (210, 220) being stacked on a radially outer side of the slots of said first wires; and

a terminal portion (300) electrically connecting at least two of the plurality of first wires (110,120) of the first winding portion and the plurality of second wires (210, 220) of the second winding portion.

## Description

### CROSS REFERENCE TO RELATED APPLICATION

The present application claims priority to Korean Patent Application No. 10-2024-0125577, filed September 13, 2024 and Korean Patent Application No. 10-2025-0008479, filed January 21, 2025, the entire contents of which is incorporated herein for all purposes by this reference.

### BACKGROUND OF THE INVENTION

### Field of the Invention

The present invention relates to a continuous winding assembly, and more particularly, to a continuous winding assembly for winding on a motor stator.

### Description of the Related Art

In motor winding design, differences in the phase of the magnetomotive force (MMF) per slot and in the inductance per layer occur, and these factors present critical challenges in maintaining MMF balance among parallel windings. The MMF phase of each slot is determined by dividing 360 degrees by the number of slots per pole. For example, when the total number of slots is 72 and the number of poles is 8, the MMF phase may be 40 degrees. This forms a repeating pattern for each slot group corresponding to a respective pole. At this time, the number of slots corresponding to one pole, which is 72/8, i.e., 9 slots, is referred to as a standard pitch. However, conventional techniques had limitations in achieving MMF balance among parallel circuits using only the standard pitch, and to overcome this, winding patterns mixing standard pitches and non-standard pitches have been applied.

In the conventional continuous hairpin winding method, weaving and non-standard pitches were employed to adjust the magnitude and phase of the MMF among parallel windings, resulting in different winding patterns being required for each parallel winding. For example, conventional windings required following a repeating pattern such as 10-10-7-10-10-7-9, or alternatively, a repeating pattern such as 10-7-10-10-7-10-9, resulting in the need for a different winding configuration for each winding.

Such a method required complex patterns for all windings constituting the parallel circuits, and due to the increased diversity of winding types, the coil forming process was carried out inefficiently. More specifically, the continuous hairpin winding process begins with a coil forming (bending) step, followed by stacking, crimping, roll-up, inserting, slot wedge insertion, compacting, stripping, and welding, and in conventional technology, the complex winding patterns required six forming machines in the process, causing inefficiency in manufacturing. In addition, the complex patterns increased the likelihood of work errors and defects in subsequent processes. As a result, the conventional technology caused complexity and inefficiency in both design and manufacturing processes in achieving MMF balance among parallel windings.

### Documents of Related Art

(Patent Document 1) Korean Published Patent 10-2021-0031762, "Winding Weaving Method of Electromechanical Components"

### SUMMARY OF THE INVENTION

The present invention has been conceived to solve the above problems, and it is an object of the present invention to provide a continuous winding assembly capable of simplifying the coil forming process and minimizing errors caused by operational mistakes by using continuous windings with a standard pitch.

It is another object of the present invention to provide a continuous winding assembly capable of minimizing the overall size of the stator by including terminal sections that connect the continuous windings with standard pitches along the shortest path.

In order to accomplish the above objects, a continuous winding assembly applied to a stator including a predetermined slot group adjacent to a pole of a rotor and arranged in a continuous position, with one slot group per rotor pole, according to an embodiment of the present invention includes a first winding portion including a plurality of wires having a standard pitch that continuously pass through a plurality of the slot groups, with one wire per slot group, a second winding portion including a plurality of wires having a standard pitch that continuously pass through a plurality of the slot groups, with one wire per slot group, the wires being stacked on the outer side of the slots relative to the wires of the first winding portion, and a terminal portion electrically connecting at least two of the wires included in the first winding portion and the second winding portion.

In addition, each wire of the first winding portion is wound around the circumference of the stator twice, and the layers of wires stacked in the slots are defined, from the innermost side of the slots, as a first layer, second layer, third layer, fourth layer, fifth layer, and sixth layer, the first winding portion includes a first-1 wire wound in the first layer and the third layer, and a first-2 wire wound in the second layer and the fourth layer at a position opposite the first-1 wire with respect to the axis of the stator.

In addition, each wire of the second winding portion is wound around the circumference of the stator once, and the second winding portion includes a second-1 wire wound in the fifth layer and a second-2 wire wound in the sixth layer.

In addition, the terminal portion includes a first terminal including a plurality of connection parts, one end of which is coupled to the first-1 wire or the first-2 wire and the other end of which is connected to the second-1 wire or the second-2 wire, each of the connection parts comprising a first end coupled to the first-1 wire or the first-2 wire, a second end coupled to the second-1 wire or the second-2 wire, and a connecting member connecting the first end and the second end.

In addition, the first terminal includes a first connection part in which the connecting member is extended to a length greater than the standard pitch, and a second connection part in which the connecting member is extended to a length equal to or less than the standard pitch, and the extension length of the first and second ends of the first connection part is longer than the extension length of the first and second ends of the second connection part.

In addition, both ends of the second-1 wire and the second-2 wire extend outward along the respective extension directions thereof, and the terminal portion includes a second terminal including a plurality of third connection parts, each having one end coupled to the second-1 wire and the other end coupled to the second-2 wire.

In addition, both ends of the second-1 wire extend outward along the extension direction thereof, one end of the second-2 wire extends outward along extension direction thereof, and the other end of the second-2 wire extends inward along extension direction thereof.

In addition, the ends of the second-1 wire and the second-2 wire are directly coupled to each other.

In addition, the second-1 wire and the second-2 wire are integrally formed and extend in the same direction along the circumferential direction of the motor.

In addition, the second-1 wire and the second-2 wire are integrally formed and extend in opposite directions along the circumferential direction of the motor.

### BRIEF DESCRIPTION OF THE DRAWINGS

FIG. 1 is a plan view illustrating a stator wound with the continuous winding assembly of the present invention;
FIG. 2 is a schematic view illustrating the wires of the first winding portion and the second winding portion of the continuous winding assembly according to the first embodiment of the present invention;
FIG. 3 is a partial plan view illustrating the layers of the slots of the present invention;
FIG. 4 shows tables illustrating winding positions of the first-1 wire of the first winding portion of the present invention;
FIG. 5 shows tables illustrating winding positions of the first-2 wire of the first winding portion according to the present invention;
FIG. 6 shows tables illustrating winding positions of the second-1 wire of the second winding portion according to the present invention;
FIG. 7 is a table illustrating winding positions of the second-2 wire of the second winding portion according to the present invention;
FIG. 8 is a schematic view illustrating a coupling relationship between the first winding portion and the second winding portion of the continuous winding assembly according to the first embodiment the present invention;
FIG. 9 is a partial perspective view illustrating terminal shapes of the first winding portion and the second winding portion of the continuous winding assembly according to the first embodiment the present invention;
FIG. 10 is a schematic view illustrating a first connection part of a first terminal according to the present invention;
FIG. 11 is a schematic view illustrating a second connection part of a first terminal according to the present invention;
FIG. 12 is a partial perspective view illustrating terminal shapes of the second winding portion of the continuous winding assembly according to the first embodiment of the present invention;
FIG. 13 is a schematic view illustrating wires of the first winding portion and the second winding portion of the continuous winding assembly according to the second embodiment of the present invention;
FIG. 14 is a partial perspective view illustrating terminal shapes of the second winding portion of the continuous winding assembly according to the second embodiment of the present invention;
FIG. 15 is a schematic view illustrating a coupling relationship between the first winding portion and the second winding portion of the continuous winding assembly according to the third and fourth embodiments of the present invention;
FIG. 16 is a schematic view illustrating wires of the first winding portion and the second winding portion of the continuous winding assembly according to the third embodiment of the present invention; and

### DETAILED DESCRIPTION OF THE INVENTION

In the following, the technical aspects of the present invention will be described in more detail with reference to the accompanying drawings. Prior to this, the terms and words used in the following specification and claims should not be construed in a limited sense to their usual or dictionary meanings but should be interpreted according to the meanings and concepts that conform to the technical ideas of the present invention, based on the principle that the inventor can appropriately define the terms to best describe their invention.

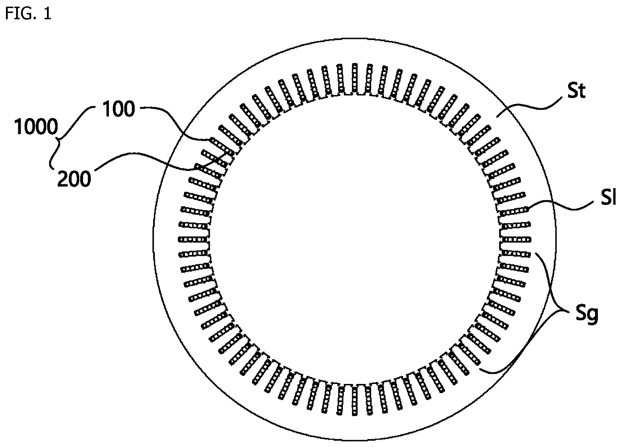

Hereinafter, a basic configuration of the continuous winding assembly 1000 of the present invention will be described with reference to FIGS. 1 to 3.

As illustrated in FIG. 1, the continuous winding assembly 1000 of the present invention may be applied to a stator St, which includes a predetermined slot group Sg provided adjacent to the poles of a rotor at consecutive positions, with one slot group Sg per pole of the rotor. More specifically, the stator St of a motor to which the continuous winding assembly 1000 of the present invention is applied may be an 8-pole, 72-slot, 6-layer type. The continuous winding assembly 1000 of the present invention may include a first winding portion 100 and a second winding portion 200 connected to each other to form a series circuit.

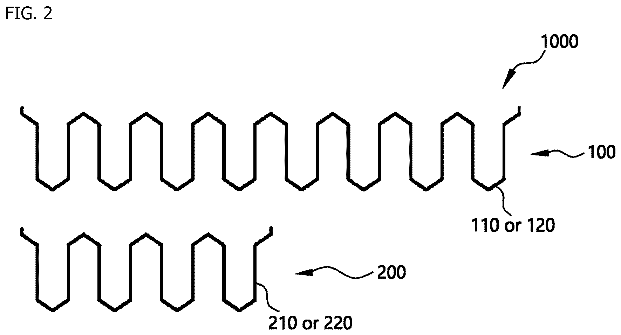

In more detail, the first winding portion 100 may include a plurality of wires having a standard pitch of 9 that continuously pass through a plurality of slot groups Sg, with one wire per slot group Sg. The second winding portion 200 may also include a plurality of wires having a standard pitch, which are stacked on the outermost side of the slots Sl relative to the wires of the first winding portion 100 and continuously pass through a plurality of slot groups Sg, with one wire per slot group Sg. As illustrated in FIG. 2, the wires of the first winding portion 100 and the wires of the second winding portion 200 may each be formed with a standard pitch, and the continuous winding assembly 1000 of the present invention may include a terminal portion 300 that electrically connects at least two wires among the wires included in the first winding portion 100 and the second winding portion 200. The specific shape of the terminal portion 300 will be described later with reference to the accompanying drawings.

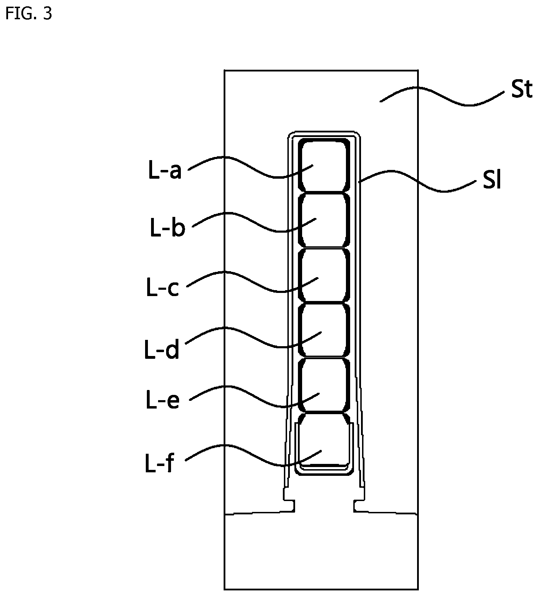

More specifically, as illustrated in FIG. 3, the layers of wires stacked in a single slot Sl may be distinguished from the innermost side of the slot Sl as a first layer L-a, a second layer L-b, a third layer L-c, a fourth layer L-d, a fifth layer L-e, and a sixth layer L-f. Each wire of the first winding portion 100 may be wound around the circumference of the stator St twice, and more specifically, the first winding portion 100 may include a first-1 wire 110 wound in the first layer L-a and the third layer L-c, and a first-2 wire 120 wound in the second layer L-b and the fourth layer L-d, positioned opposite the first-1 wire 110 with respect to the motor axis. Furthermore, each wire of the second winding portion 200 may be wound around the circumference of the stator St once, and the second winding portion 200 may include a second-1 wire 210 wound in the fifth layer L-e and a second-2 wire 220 wound in the sixth layer L-f.

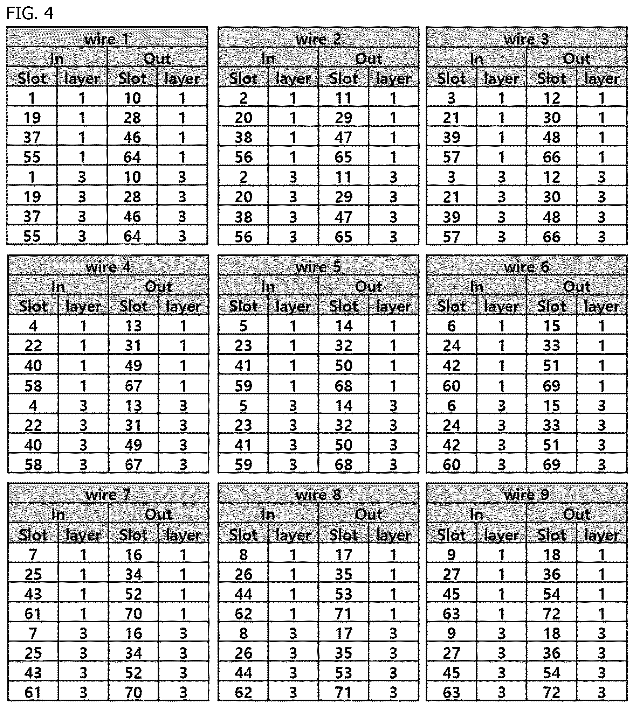

Hereinafter, a more detailed description will be given of the winding arrangement of the first winding portion 100 and the second winding portion 200 of the present invention with reference to FIGS. 4 to 7.

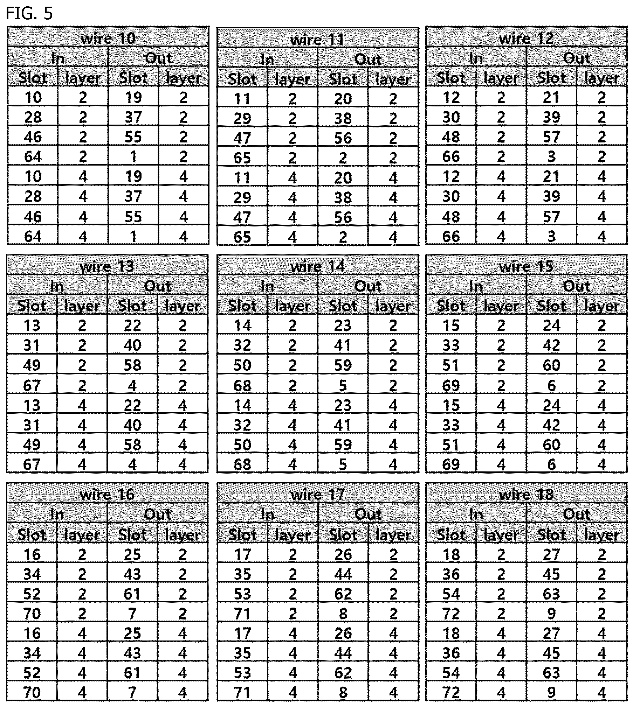

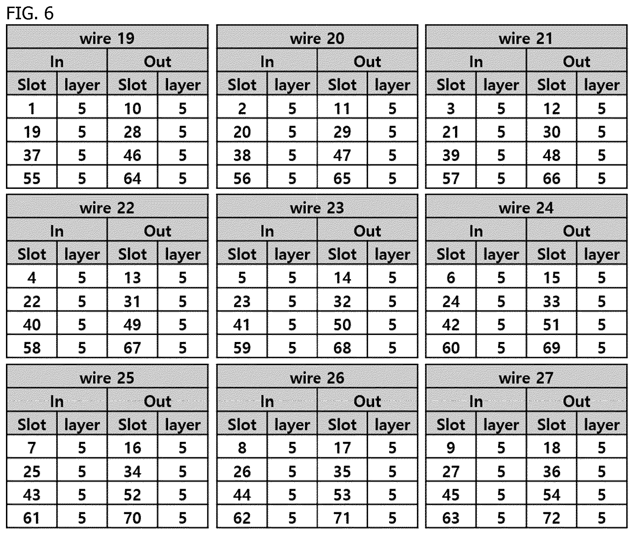

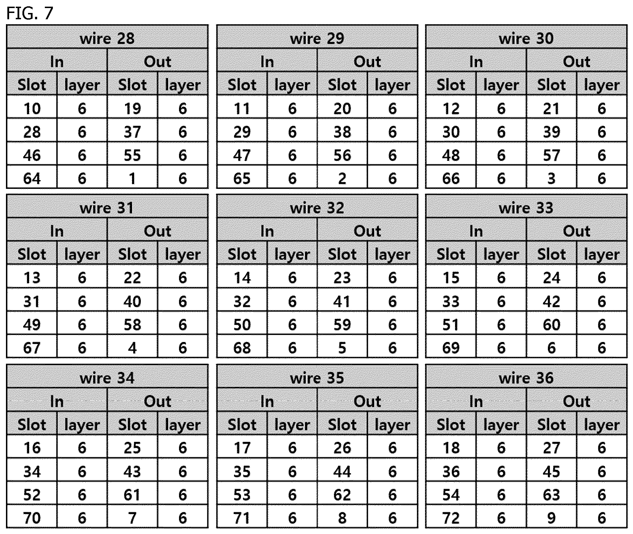

FIGS. 4 to 7 are tables illustrating the in-out positions of the wires, where wires numbered 1 to 9 in FIG. 4 correspond to the first-1 wire 110 of the first winding portion 100, wires numbered 10 to 18 in FIG. 5 correspond to the first-2 wire 120 of the first winding portion 100, wires numbered 19 to 27 in FIG. 6 correspond to the second-1 wire 210 of the second winding portion 200, and wires numbered 28 to 36 in FIG. 7 correspond to the second-2 wire 220 of the second winding portion 200.

As shown in FIG. 4, the first-1 wire 110 of the first winding portion 100 may be continuously inserted with the same phase. A segment may be initially inserted into the first layer L-a of slots Sl 1 to 9 adjacent to one pole, then withdrawn by jumping to the first layer L-a of slots Sl 10 to 18 adjacent to the next pole, and subsequently inserted by jumping to the first layer L-a of slots Sl 19 to 27 adjacent to the following pole, with this pattern repeating up to slots Sl 64 to 72, after which the winding may continue into the third layer L-c and be wound again. This repetition may continue until the end is withdrawn from the third layer L-c of slots Sl 64 to 72.

In addition, as shown in FIG. 5, the first-2 wire 120 of the first winding portion 100 may also be continuously inserted with the same phase, and the first-2 wire 120 may be formed with a phase opposite to that of the first-1 wire 110. More specifically, a segment of the first-2 wire 120 may be initially inserted into the second layer L-b of slots Sl 10 to 18 adjacent to one pole, then withdrawn by jumping to the second layer L-b of slots Sl 19 to 27 adjacent to the next pole, and subsequently inserted by jumping to the second layer L-b of slots Sl 28 to 36 adjacent to the following pole, with this pattern repeating up to slots Sl 1 to 9, after which the winding may continue into the fourth layer L-d and be wound again. This repetition may continue until the end is withdrawn from the fourth layer L-d of slots Sl 1 to 9.

As shown in FIG. 6, the second-1 wire 210 of the second winding portion 200 may be continuously inserted with the same phase and may be wound only in the fifth layer L-e. More specifically, a segment of the second-1 wire 210 may be initially inserted into the fifth layer L-e of slots Sl 1 to 9 adjacent to one pole, then withdrawn by jumping to the fifth layer L-e of slots Sl 10 to 18 adjacent to the next pole, and subsequently inserted by jumping to the fifth layer L-e of slots Sl 19 to 27 adjacent to the following pole, with this pattern repeating up to slots Sl 64 to 72, where the end is withdrawn from the fifth layer L-e.

As shown in FIG. 7, the second-2 wire 220 of the second winding portion 200 may be continuously inserted with the same phase and may be wound only in the sixth layer L-f. More specifically, a segment of the second-2 wire 220 may be initially inserted into the sixth layer L-f of slots Sl 1 to 9 adjacent to one pole, then withdrawn by jumping to the sixth layer L-f of slots Sl 10 to 18 adjacent to the next pole, and subsequently inserted by jumping to the sixth layer L-f of slots Sl 19 to 27 adjacent to the following pole, with this pattern repeating up to slots Sl 64 to 72, where the end is withdrawn from the sixth layer L-f.

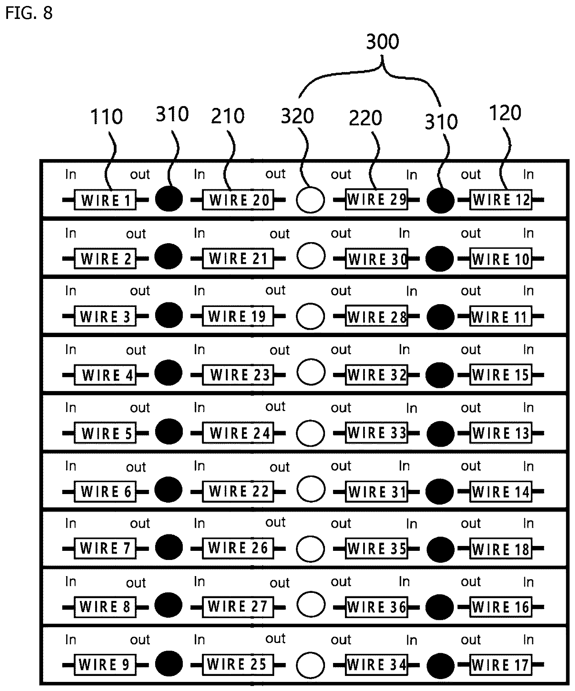

Hereinafter, a more detailed description will be given of the continuous winding assembly 1000 according to the first and second embodiments of the present invention with reference to FIGS. 8 to 14.

As described above, in the continuous winding assembly 1000 according to the first embodiment of the present invention, the first-1 wire 110 and the first-2 wire 120 are formed by alternating portions that extend axially along the motor for insertion into the slots Sl and jump portions having a standard pitch, with the sum of the pitches of the jump portions being 135 (= 72 (total number of slots SI) × 2 - 9). Accordingly, the first-1 wire 110 and the first-2 wire 120 may be wound around the circumference of the stator St twice. Here, the second-1 wire 210 may be formed in the same shape as the first-1 wire 110 and the first-2 wire 120, except that the sum of the pitches of its jump portions may be 64 (= 72 (total number of slots SI) - 9). The second-2 wire 220 may also be formed in the same shape as the second-1 wire 210. Accordingly, the second-1 wire 210 and the second-2 wire 220 may be wound around the circumference of the stator St only once.

As illustrated in FIG. 8, the first-1 wire 110 may be connected to the second-1 wire 210, the first-2 wire 120 may be connected to the second-2 wire 220, and the second-1 wire 210 and the second-2 wire 220 may be connected to each other to form an electrical connection. Here, wires of the same phase may be connected. For example, the first wire of the first-1 wire 110 (arranged in the first layer L-a with an MMF phase of 0° four times and in the third layer L-c with an MMF phase of 0° four times) may be connected to the 20th wire of the second-1 wire 210 (arranged in the fifth layer L-e with an MMF phase of 40° four times), and the 12th wire of the first-2 wire 120 (arranged in the second layer L-b with an MMF phase of 80° four times and in the fourth layer L-d with an MMF phase of 80° four times) may be connected to the 29th wire of the second-2 wire 220 (arranged in the sixth layer L-f with an MMF phase of 40° four times), while the 20th wire and the 29th wire may also be connected to each other. Accordingly, a series circuit may be formed in the order of the first-1 wire 110, the second-1 wire 210, the second-2 wire 220, and the first-2 wire 120, achieving both MMF balance and inductance balance.

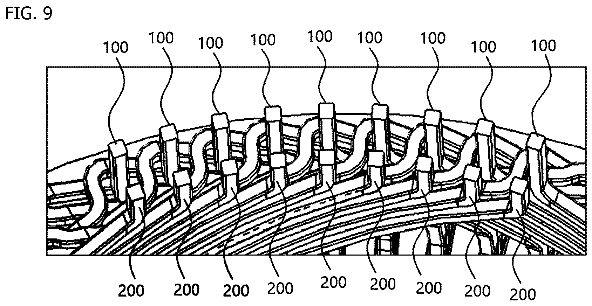

More specifically, as illustrated in FIG. 9, since the layers of the wound portions of the wires of the first winding portion 100 and the second winding portion 200 are different, a certain radial spacing may occur. Accordingly, the terminal portion 300 of the continuous winding assembly 1000 of the present invention may include a first terminal 310 that connects the wires of the first winding portion 100 and the second winding portion 200. More specifically, the first terminal 310 may include a plurality of connection parts, each having one end coupled to the first-1 wire 110 or the first-2 wire 120 and the other end connected to the second-1 wire 210 or the second-2 wire 220. Each connection part may include a first end 311 coupled to the first-1 wire 110 or the first-2 wire 120, a second end 312 coupled to the second-1 wire 210 or the second-2 wire 220, and a connecting member 313 that connects the first end 311 and the second end 312.

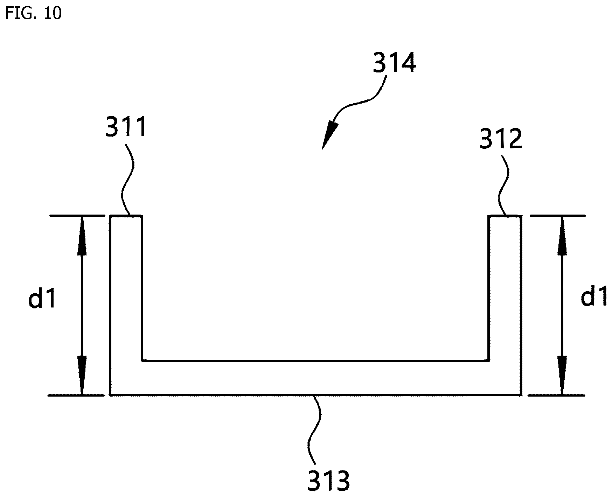

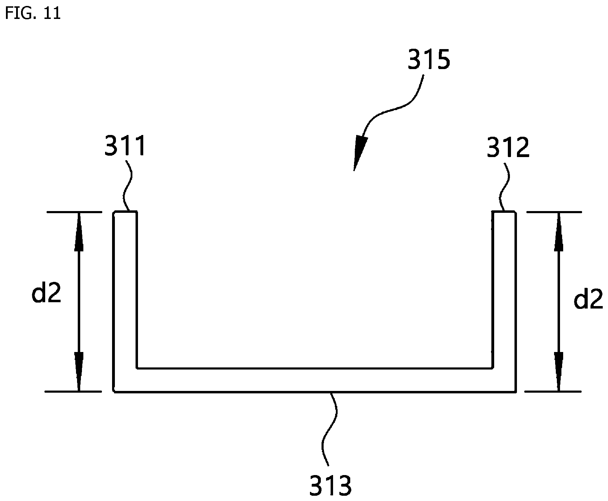

Here, as illustrated in FIG. 10, the first terminal 310 may be one of the connection parts and may include a first connection part 314 in which the length of the connecting member 313 is extended to a length exceeding the standard pitch. In addition, as illustrated in FIG. 11, the second terminal 320 may be one of the connection parts and may include a second connection part 315 in which the length of the connecting member 313 is extended to a length equal to or less than the standard pitch. The extended lengths d1 of the first end 311 and the second end 312 of the first connection part 314 may be formed longer than the extended lengths d2 of the first end 311 and the second end 312 of the second connection part 315.

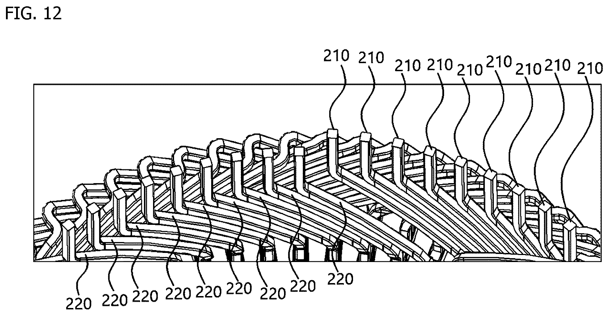

In addition, according to the above-described wire arrangement, as illustrated in FIG. 2, both ends of the second-1 wire 210 and the second-2 wire 220 may be bent outward in their respective extension directions (circumferential direction) and extended, whereby the ends of the second-1 wire 210 and the second-2 wire 220 may be arranged as shown in FIG. 12. The terminal portion 300 may include a second terminal 320 that electrically connects the second-1 wire 210 and the second-2 wire 220, and the second terminal 320 may include a plurality of third connection parts (not shown). More specifically, each third connection part (not shown) may have one end coupled to the second-1 wire 210 and the other end coupled to the second-2 wire 220.

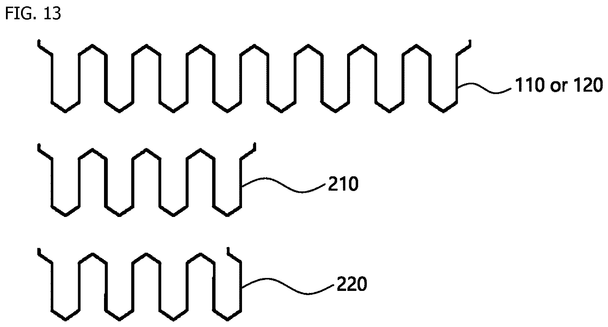

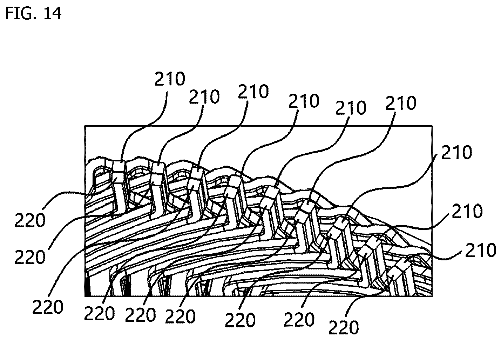

In addition, as illustrated in FIG. 13, in the continuous winding assembly 1000 according to the second embodiment of the present invention, the first winding portion 100 and the first terminal 310 may be formed in the same manner as in the first embodiment described above, and the second winding portion 200 may be formed such that both ends of the second-1 wire 210 are bent outward and extended according to their respective extension directions, one end of the second-2 wire 220 is extended outward along its extension direction, and the other end of the second-2 wire 220 is bent inward along its extension direction. Accordingly, as illustrated in FIG. 14, the second-1 wire 210 and the second-2 wire 220 may be connected directly by contacting and welding to each other without the second terminal 320.

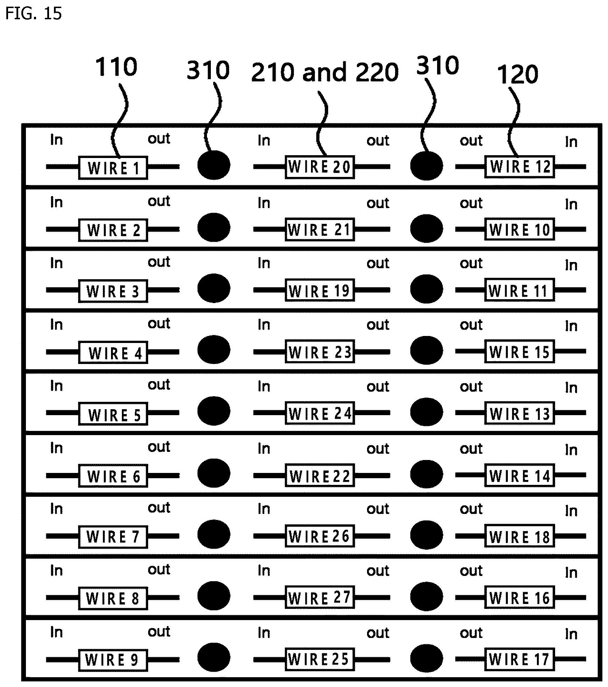

Hereinafter, a more detailed description will be given of the continuous winding assembly 1000 according to the third and fourth embodiments of the present invention with reference to FIGS. 15 to 17.

In the continuous winding assembly 1000 according to the third and fourth embodiments of the present invention, the first winding portion 100 and the first terminal 310 may be formed in the same manner as in the first and second embodiments described above, and the second winding portion 200 may be formed as a single wire, as shown in FIG. 14. That is, the second-1 wire 210 and the second-2 wire 220 may be integrally formed (corresponding to wires 19 to 27 in FIG. 15).

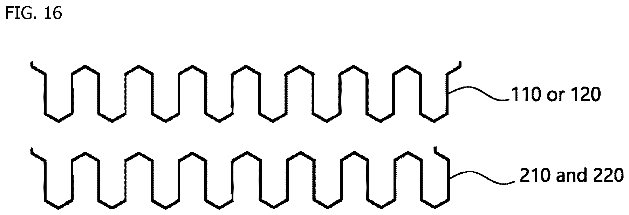

More specifically, in the continuous winding assembly 1000 according to the third embodiment as illustrated in FIG. 16, the second-1 wire 210 and the second-2 wire 220 may be integrally formed. The second-1 wire 210 and the second-2 wire 220 may be connected to each other and extend in the same direction along the circumferential direction of the motor. Accordingly, the welding and coupling process of the second-1 wire 210 and the second-2 wire 220 becomes unnecessary, thereby improving process efficiency. In addition, the end of the second-2 wire 220 portion, i.e., the portion wound in the sixth layer L-f, may be bent inward based on the extension direction. As a result, the extension length of the connecting member 313 of the first terminal 310, which connects the first winding portion 100 and the second winding portion 200, may be shortened.

Furthermore, in the continuous winding assembly 1000 according to the fourth embodiment, the second-1 wire 210 and the second-2 wire 220 may be integrally formed and preferably extend in opposite directions along the circumferential direction of the motor. Accordingly, the welding and coupling process of the second-1 wire 210 and the second-2 wire 220 becomes unnecessary, thereby improving process efficiency. In addition, the end of the second-2 wire 220 portion, i.e., the portion wound in the sixth layer L-f, may be bent inward based on the extension direction. As a result, the extension length of the connecting member 313 of the first terminal 310, which connects the first winding portion 100 and the second winding portion 200, may be shortened.

The continuous winding assembly of the present invention having the above configuration is advantageous for simplifying the coil forming process and minimizing errors caused by operational mistakes through the use of continuous windings with a standard pitch.

The continuous winding assembly of the present invention is also advantageous for minimizing the overall size of the stator by including terminal sections that connect the continuous windings with standard pitches along the shortest path.

The technical concept of the present invention should not be interpreted solely based on the above-described embodiments. It should be understood that various modifications and changes are possible within the scope of the claims without departing from the essence of the invention claimed in the claims. Thus, such improvements and modifications fall within the protection scope of the present invention as long as they are obvious to those skilled in the art.

### DESCRIPTION OF REFERENCE NUMERALS

1000: continuous winding assembly
100: first winding portion
110: first-1 wire
120: first-2 wire
200: second winding portion
210: second-1 wire
220: second-2 wire
300: terminal portion
310: first terminal
311: first end
312: second end
313: connecting member
314: first connection part
315: second connection part
L-a: first layer
L-b: second layer
L-c: third layer
L-d: fourth layer
L-e: fifth layer
L-f: sixth layer
St: stator
Sl: slot

## Claims

1. A continuous winding assembly applied to a stator including slots having a plurality of slot groups configured to be disposed adjacent to poles of a rotor and arranged in a consecutive position with a slot group of the plurality of slot groups per a pole of the poles of the rotor, the continuous winding assembly comprising:
a first winding portion including a plurality of first wires having a standard pitch, the plurality of first wires continuously passes through the plurality of slot groups with a wire of the plurality of first wires per a slot group of the plurality of slot groups;
a second winding portion including a plurality of second wires having the standard pitch, the plurality of second wires continuously passes through the plurality of slot groups, with a wire of the plurality of first wires per a slot group of the plurality of slot groups, the plurality of second wires being stacked on an outer side of the slots relative to the plurality of first wires of the first winding portion; and
a terminal portion electrically connecting at least two of the plurality of first wires of the first winding portion and the plurality of second wires of the second winding portion.

2. The continuous winding assembly of claim 1, wherein each wire of the plurality of first wires of the first winding portion is wound around a circumference of the stator twice,
wherein a plurality of layers of the plurality of first wires stacked in each slot of the slots is defined, from the innermost side of the slots, as a first layer, a second layer, a third layer, a fourth layer, a fifth layer, and a sixth layer, and
wherein the plurality of first wires of the first winding portion includes a first-1 wire wound in the first layer and the third layer and a first-2 wire wound in the second layer and the fourth layer at a position opposite to the first-1 wire with respect to the axis of the stator.

3. The continuous winding assembly of claim 2, wherein each wire of the plurality of second wires of the second winding portion is wound around the circumference of the stator once, and the plurality of second wires of the second winding portion includes a second-1 wire wound in the fifth layer and a second-2 wire wound in the sixth layer.

4. The continuous winding assembly of claim 3, wherein the terminal portion comprises a first terminal including a plurality of connection parts, each connection part of the plurality of connection parts having a first end coupled to one of the first-1 wire or the first-2 wire and a second end coupled to one of the second-1 wire or the second-2 wire; and
a connecting member connecting the first end and the second end.

5. The continuous winding assembly of claim 4, wherein the first terminal comprises a first connection part of the plurality of the connection part having a first length greater than the standard pitch, and a second connection part having a second length equal to or less than the standard pitch, and
wherein a first extension length of the connecting member of the first connection part is longer than the extension length of the connecting member of the second connection part.

6. The continuous winding assembly of any one of claims 3 to 5, wherein both ends of the second-1 wire and the second-2 wire extend outward along respective extension directions thereof, and the terminal portion comprises a second terminal including a plurality of connection parts, each connection part having a first end coupled to the second-1 wire and a second end coupled to the second-2 wire.

7. The continuous winding assembly of claim 6, wherein both ends of the second-1 wire extend outward along a first extension direction thereof, and
wherein a first end of the second-2 wire extends outward along a second extension direction thereof and a second end of the second-2 wire extends inward along the second extension direction thereof.

8. The continuous winding assembly of claim 6 or 7, wherein the second-1 wire and the second-2 wire are directly coupled to each other.

9. The continuous winding assembly of claim 6 or 7, wherein the second-1 wire and the second-2 wire are integrally formed and extend in the same direction along a circumferential direction of a motor.

10. The continuous winding assembly of claim 6 or 7, wherein the second-1 wire and the second-2 wire are integrally formed and extend in opposite directions along a circumferential direction of a motor.
